(19) Europäisches Patentamt
European Patent Office
Office européen des brevets

(11) EP 3 833 697 B1

(12) EUROPEAN PATENT SPECIFICATION

(45) Date of publication and mention of the grant of the patent:
**15.11.2023 Bulletin 2023/46**

(21) Application number: **19748559.2**

(22) Date of filing: **07.08.2019**

(51) International Patent Classification (IPC):
***C08F 214/22*** (2006.01) ***C08F 216/06*** (2006.01)
***C08F 220/06*** (2006.01) ***C08F 220/20*** (2006.01)

(52) Cooperative Patent Classification (CPC):
(C-Sets available)
**C08F 214/225; C08F 216/06; C08F 220/06; C08F 220/20** (Cont.)

(86) International application number:
**PCT/EP2019/071215**

(87) International publication number:
**WO 2020/030690 (13.02.2020 Gazette 2020/07)**

(54) **SELF CROSSLINKING PVDF**

SELBSTVERNETZENDES PVDF

PVDF À AUTO-RÉTICULATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.08.2018 EP 18306091**

(43) Date of publication of application:
**16.06.2021 Bulletin 2021/24**

(73) Proprietor: **Solvay Specialty Polymers Italy S.p.A.**
**20021 Bollate (MI) (IT)**

(72) Inventors:
- **ABUSLEME, Julio A.**
**21047 Saronno VA (IT)**
- **BRUSSEAU, Ségolène**
**39500 Tavaux (FR)**

(74) Representative: **Benvenuti, Federica**
**Solvay S.A.**
**Intellectual Assets Management**
**Rue de la Fusée, 98**
**1130 Haren (BE)**

(56) References cited:
**EP-A1- 1 621 573**
**EP-A1- 3 075 799**
**WO-A1-2008/129041**
**JP-A- 2005 310 747**
**US-A- 5 880 204**
**US-A1- 2008 154 004**

EP 3 833 697 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 220/20, C08F 220/06**

## Description

## Technical Field

The present invention pertains to crosslinkable vinylidene fluoride copolymers comprising recurring units derived from hydrophilic monomers useful for producing shaped articles characterized by improved performances.

## Background Art

Polyvinylidene fluoride polymers (PVDFs) are melt-processable resins that are formed into polymer structures by many different processes, such as extrusion, injection molding, fiber spinning, extrusion blow molding and blown film.

PVDFs are also used in form of solution, prepared by dissolving PVDF powder in organic solvents like acetone or NMP, for the production of articles such as films, coatings and fibers.

Increasing the PVDFs molecular weight is known to increase the performances of articles made from these materials, in particular in terms of mechanical properties.

However, high molecular weight PVDFs are difficult or even impossible to be melt-processed.

High molecular weight PVDFs are also difficult to be properly dissolved in organic solvents. In particular, the higher the molecular weight, the longer it takes to prepare the solution.

It is thus difficult to impossible shaping said high molecular weight PVDFs by the processes known in the art.

The molecular weight of PVDF resins can be increased by crosslinking.

Approaches of crosslinking usually involve blending a cross-linker promoter with the fluoropolymer, followed by heat treatment or treatment with ionizing radiation to give crosslinking.

US5003008 discloses a method for the preparation of a shaped article of a crosslinked polyvinylidene fluoride resin that comprises the steps of compounding a polyvinylidene fluoride resin with an organosilane, grafting said organosilane compound onto the molecules of the polyvinylidene fluoride resin, shaping the resin compound into a form of an article and heating the thus shaped article in the presence of water and a silanol-condensation catalyst in contact therewith.

In an alternative approach, fluorinated copolymers comprising pendant functional groups can be thermally crosslinked in the presence of a cross-linking promoter. As an example, EP0969023 discloses functionalized fluoropolymers that may be thermally crosslinked in the presence of cross-linking promoters such as polyamides, wherein the functional groups of said fluoropolymers include esters, alcohols and acids.

US2006/0148912 discloses a vinylidene fluoride copolymer that incorporates in the backbone at least one species of hydrophilic group selected from epoxy group, hydroxyl group, carboxy group, ester group, amide group and acid anhydride group, which is admixed with a plasticizer and a good solvent to prepare a composition useful in the production of porous membranes. The film obtained by extrusion of said composition is then heat treated in order to increase its crystallinity, for the purpose of providing an improved processability of the porous membrane obtained therein. After the heat treatment, the film is subjected to an extraction process to remove the plasticizer and providing the porous membrane.

WO 2008/129041 discloses a copolymer comprising recurring units derived from vinylidene fluoride (VDF) monomer and from 0.05 to 10 % by moles of recurring units derived from an hydrophilic (meth)acrylic monomer (MA) and being characterized by a fraction of randomly distributed units (MA) of at least 40 %.

## Summary of invention

It has been found that randomly incorporating into a vinylidene fluoride backbone certain monomers that can undergo crosslinking provides crosslinkable vinylidene fluoride copolymers that can be shaped and subsequently thermally crosslinked. The shaped articles obtained therefrom show improved performances even if crosslinked in the absence of any additive or crosslinking promoter.

It is thus an object of the invention a crosslinkable fluoropolymer [polymer (F)] comprising:

- (i) recurring units derived from vinylidene fluoride (VDF) monomer;
- (ii) recurring units derived from at least one hydroxyl group-containing vinyl monomer (HA);
- (iii) recurring units derived from at least one carboxyl group-containing vinyl monomer (CA);

wherein the total amount of monomer (HA) and monomer (CA) in said polymer (F) is of at most 10.0 % by moles, preferably at most 5.0% by moles, more preferably at most 1.5% by moles, with respect to the total moles of recurring units of polymer (F); and

wherein a fraction of at least 40% of monomer (HA) and a fraction of at least 40% of monomer (CA) are randomly

distributed into said polymer (F).

A second object of the present invention pertains to a composition (C) comprising the crosslinkable polymer (F) as above defined and at least one acidic crosslinking catalyst.
A third object of the present invention pertains to a process for preparing a crosslinked fluoropolymer (XLF) comprising the step of submitting a polymer (F) or a composition (C) to a heat treatment at a temperature comprised between 130°C and 250°C.
The present invention further pertains to an article comprising the crosslinked fluoropolymer (XLF) obtained as above defined.
The present invention also pertains to a method for making an article comprising the crosslinked fluoropolymer (XLF), the method comprising:

(a) processing the polymer (F) or the composition (C) as above defined into a shaped article;
(b) thermally treating the shaped article provided in step (a) at a temperature comprised between 130°C and 250°C.

## Description of embodiments

By the term "recurring unit derived from vinylidene fluoride" (also generally indicated as vinylidene difluoride 1,1-difluoroethylene, VDF), it is intended to denote a recurring unit of formula $CF_2=CH_2$.
Suitable hydroxyl group-containing vinyl monomers (HA) are compounds of formula (I):

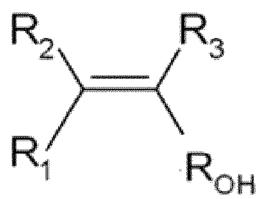

(I)

wherein:
$R_1$, $R_2$ and $R_3$, equal to or different from each other, are independently selected from a hydrogen atom, a halogen atom, and a $C_1$-$C_3$ hydrocarbon group and $R_{OH}$ is a $C_2$-$C_{10}$ hydrocarbon chain moiety comprising at least one hydroxyl group and possibly containing in the chain one or more oxygen atoms, carbonyl groups or carboxy groups.
In a preferred embodiment, monomers (HA) are compounds of formula (Ia):

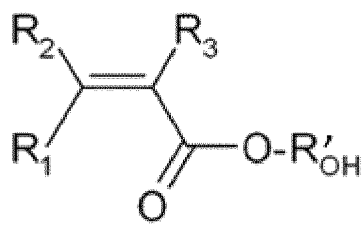

(Ia)

wherein:
$R_1$, $R_2$ and $R_3$, equal to or different from each other, are independently selected from a hydrogen atom and a $C_1$-$C_3$ hydrocarbon group and $R'_{OH}$ is a $C_1$-$C_5$ hydrocarbon moiety comprising at least one hydroxyl group.
Non-limitative examples of monomers (HA) of formula (Ia) include, notably:

- hydroxyethyl(meth)acrylate (HEA),
- 2-hydroxypropyl acrylate (HPA),
- hydroxyethylhexyl(meth)acrylate,

and mixtures thereof.
Preferably, the at least one monomer (HA) is hydroxyethyl(meth)acrylate (HEA).

Suitable carboxyl group-containing vinyl monomers (CA) are compounds of formula (II):

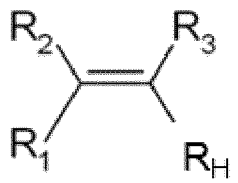

(II)

wherein:
$R_1$, $R_2$ and $R_3$, equal to or different from each other, are independently selected from a hydrogen atom and a $C_1$-$C_3$ hydrocarbon group and $R_H$ is a $C_1$-$C_{10}$ hydrocarbon chain moiety comprising at least one carboxyl group.

In a preferred embodiment, monomers (CA) are compounds of formula (IIa):

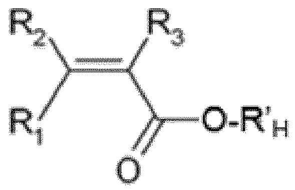

(IIa)

wherein
$R_1$, $R_2$ and $R_3$, equal to or different from each other, are independently selected from a hydrogen atom and a $C_1$-$C_3$ hydrocarbon group and $R'_H$ is a hydrogen or a $C_1$-$C_5$ hydrocarbon moiety comprising at least one carboxyl group.

Non-limitative examples of monomers (CA) of formula (IIa) include, notably:

- acrylic acid (AA) and
- (meth)acrylic acid,

and mixtures thereof.

Preferably, the at least one monomer (CA) is acrylic acid (AA).

The molar ratio between recurring units (ii) and recurring units (iii) in polymer (F) is preferably comprised in the range from 20:1 to 1:20, preferably from 10:1 to 1:10, more preferably from 1:2 to 2:1; still more preferably, the molar ratio is 1:1.

It is essential that in polymer (F) a fraction of at least 40% of monomer (HA) and a fraction of at least 40% of monomer (CA) are randomly distributed into said polymer (F).

The expression "fraction of randomly distributed monomer (HA)" is intended to denote the percent ratio between the average number of (HA) monomer sequences (%), said sequences being comprised between two recurring units derived from VDF monomer, and the total average number of (MA) monomer recurring units (%), according to the following formula:

$$\text{Fraction of randomly distributed units (HA)} = \frac{\text{average number of (HA) sequences (\%)}}{\text{average total number of (HA) units (\%)}} \cdot 100$$

When each of the (HA) recurring units is isolated, that is to say comprised between two recurring units of VDF monomer, the average number of (HA) sequences equal the average total number of (HA) recurring units, so the fraction of randomly distributed units (HA) is 100%: this value corresponds to a perfectly random distribution of (HA) recurring units.

Thus, the larger is the number of isolated (HA) units with respect to the total number of (HA) units, the higher will be the percentage value of fraction of randomly distributed units (HA), as above described.

The expression "fraction of randomly distributed monomer (CA)" is intended to denote the percent ratio between the average number of (CA) monomer sequences (%), said sequences being comprised between two recurring units derived from VDF monomer, and the total average number of (CA) monomer recurring units (%), according to the following formula:

$$\text{Fraction of randomly distributed units (CA)} = \frac{\text{average number of (CA) sequences (\%)}}{\text{average total number of (CA) units (\%)}} \cdot 100$$

When each of the (CA) recurring units is isolated, that is to say comprised between two recurring units of VDF monomer, the average number of (CA) sequences equal the average total number of (CA) recurring units, so the fraction of randomly distributed units (HA) is 100%: this value corresponds to a perfectly random distribution of (CA) recurring units. Thus, the larger is the number of isolated (CA) units with respect to the total number of (CA) units, the higher will be the percentage value of fraction of randomly distributed units (CA), as above described.

Determination of total average number of (HA) monomer recurring units and of (CA) monomer recurring units in polymer (F) can be performed by any suitable method, NMR being preferred.

The fraction of randomly distributed units (HA) and (CA) is preferably of at least 50%, more preferably of at least 60%, most preferably of at least 70 %.

Polymer (F) comprises preferably at least 0.1 %, more preferably at least 0.2 % moles of recurring units derived from said monomer (HA).

Polymer (F) comprises preferably at most 7.0 %, more preferably at most 5.0 % moles, even more preferably at most 3.0 % moles of recurring units derived from monomer (HA).

Polymer (F) comprises preferably at least 0.1 %, more preferably at least 0.2 % moles of recurring units derived from said monomer (CA).

Polymer (F) comprises preferably at most 7.0 %, more preferably at most 5.0 % moles, even more preferably at most 3.0 % moles of recurring units derived from monomer (CA).

Excellent results have been obtained using a polymer (F) comprising at least 70% by moles of recurring units derived from VDF.

The polymer (F) can be an elastomer or a semi-crystalline polymer, preferably being a semi-crystalline polymer.

As used herein, the term "semi-crystalline" means a fluoropolymer that has, besides the glass transition temperature Tg, at least one crystalline melting point on DSC analysis. For the purposes of the present invention a semi-crystalline fluoropolymer is hereby intended to denote a fluoropolymer having a heat of fusion of from 10 to 90 J/g, preferably of from 30 to 80 J/g, more preferably of from 35 to 75 J/g, as measured according to ASTM D3418-08.

To the purpose of the invention, the term "elastomer" is intended to designate a true elastomer or a polymer resin serving as a base constituent for obtaining a true elastomer.

True elastomers are defined by the ASTM, Special Technical Bulletin, No. 184 standard as materials capable of being stretched, at room temperature, to twice their intrinsic length and which, once they have been released after holding them under tension for 5 minutes, return to within 10 % of their initial length in the same time.

Preferably, the intrinsic viscosity of polymer (F), measured in dimethylformamide at 25 °C, is lower than 0.80 l/g, preferably lower than 0.50 l/g, more preferably lower than 0.20 l/g.

The polymer (F) of the present invention usually has a melting temperature (Tm) comprised in the range from 130 to 200°C.

The melting temperature may be determined from a DSC curve obtained by differential scanning calorimetry (hereinafter, also referred to as DSC). In the case where the DSC curve shows a plurality of melting peaks (endothermic peaks), the melting temperature (Tm) is determined on the basis of the peak having the largest peak area.

Generally, the heat treatment step of the process invention is carried out in an oven, which may contain air or an inert gas enveloping the article.

The polymer (F) may further comprise recurring units derived from one or more fluorinated comonomers (CF) different from VDF.

By the term "fluorinated comonomer (CF)", it is hereby intended to denote an ethylenically unsaturated comonomer comprising at least one fluorine atoms.

Non-limitative examples of suitable fluorinated comonomers (CF) include, notably, the followings:

(a) $C_2$-$C_8$ fluoro- and/or perfluoroolefins such as tetrafluoroethylene (TFE), hexafluoropropylene (HFP), pentafluoropropylene and hexafluoroisobutylene;

(b) $C_2$-$C_8$ hydrogenated monofluoroolefins, such as vinyl fluoride; 1,2-difluoroethylene and trifluoroethylene;

(c) perfluoroalkylethylenes of formula $CH_2$=CH-$R_{f0}$, wherein $R_{f0}$ is a $C_1$-$C_6$ perfluoroalkyl group;

(d) chloro- and/or bromo- and/or iodo-$C_2$-$C_6$ fluoroolefins such as chlorotrifluoroethylene (CTFE).

The fluorinated comonomer (CF) is preferably HFP.

In one preferred embodiment, polymer (F) is semi-crystalline and comprises from 0.1 to 10.0% by moles, preferably from 0.3 to 5.0% by moles, more preferably from 0.5 to 3.0% by moles of recurring units derived from said fluorinated comonomer (CF).

It is understood that chain ends, defects or other impurity-type moieties might be comprised in the polymer (F) without these impairing its properties.

The polymer (F) more preferably comprises recurring units derived from:

- at least 70% by moles, preferably at least 75% by moles, more preferably at least 85% by moles of vinylidene fluoride (VDF),
- from 0.1% to 3.0% by moles, preferably from 0.2% to 1.5% by moles, more preferably from 0.5% to 1.0% by moles of at least one hydroxyl group-containing vinyl monomer (HA);
- from 0.1% to 3.0% by moles, preferably from 0.2% to 1.5% by moles, more preferably from 0.5% to 1.0% by moles of at least one carboxyl group-containing vinyl monomer (CA);
- optionally from 0.5 to 3.0% by moles of recurring units derived from at least one fluorinated comonomer (CF).

The polymer (F) may be obtained by polymerization of a VDF monomer, at least one monomer (HA), at least one monomer (CA) and optionally at least one comonomer (CF), either in suspension in organic medium, according to the procedures described, for example, in WO 2008129041, or in aqueous emulsion, typically carried out as described in the art (see e.g. US 4,016,345, US 4,725,644 and US 6,479,591).

The procedure for preparing the polymer (F) comprises polymerizing in an aqueous medium in the presence of a radical initiator the vinylidene fluoride (VDF) monomer, monomer (HA) and monomer (CA), and optionally comonomer (CF), in a reaction vessel, said process comprising

- continuously feeding an aqueous solution comprising monomer (HA) and monomer (CA); and
- maintaining the pressure in said reactor vessel exceeding the critical pressure of the vinylidene fluoride.

During the whole polymerization run, pressure is maintained above critical pressure of vinylidene fluoride. Generally. the pressure is maintained at a value of more than 50 bars, preferably of more than 75 bars, even more preferably of more than 100 bars.

It is essential that a continuous feeding of an aqueous solution containing monomer (HA) and monomer (CA) is carried out during the whole duration of polymerization run.

It is thus possible to obtain a nearly statistic distribution of both the monomer (HA) and monomer (CA) within the VDF monomer polymer backbone of polymer (F).

The expressions "continuous feeding" or "continuously feeding" means that slow, small, incremental additions the aqueous solution of monomer (HA) and monomer (CA) take place until polymerization has concluded.

The aqueous solution of monomer (HA) and monomer (CA) continuously fed during polymerization amounts for at least 50 % wt of the total amount of monomer (HA) and monomer (CA) supplied during the reaction (i.e. initial charge plus continuous feed). Preferably at least 60 % wt, more preferably at least 70 % wt, most preferably at least 80 % wt of the total amount of monomer (HA) and monomer (CA) is continuously fed during polymerization. An incremental addition of VDF monomer can be effected during polymerization, even if this requirement is not mandatory. Generally, the process of the invention is carried out at a temperature of at least 35°C, preferably of at least 40°C, more preferably of at least 45°C.

When the polymerization is carried out in suspension, polymer (F) is typically provided in form of powder.

When the polymerization to obtain polymer (F) is carried out in emulsion, polymer (F) is typically provided in the form of an aqueous dispersion (D), which may be used as directly obtained by the emulsion polymerization or after a concentration step. Preferably, the solid content of polymer (F) in dispersion (D) is in the range comprised between 20 and 50% by weight.

Polymer (F) obtained by emulsion polymerization can be isolated from the aqueous dispersion (D) by concentration and/or coagulation of the dispersion and obtained in powder form by subsequent drying.

Polymer (F) in the form of powder may be optionally further extruded to provide polymer (F) in the form of pellets.

Extrusion is suitably carried out in an extruder. Duration of extrusion suitably ranges from few seconds to 3 minutes.

The polymer (F) may be dissolved in any suitable organic solvent to provide a solution (S) of polymer (F). Preferably, the solid content of polymer (F) in solution (S) is in the range comprised between 2 and 30% by weight.

Non-limitative examples of suitable organic solvents for dissolving polymer (F) are N-methyl-2-pyrrolidone

(NMP), N,N-dimethylformamide, N,N-dimethylacetamide, dimethylsulfoxide, hexamethylphosphamide, dioxane, tetrahydrofuran, tetramethylurea, triethyl phosphate, and trimethyl phosphate, aliphatic ketones, cycloaliphatic ketones, cycloaliphatic esters. These organic solvents may be used singly or in mixture of two or more species.

Polymer (F) can be shaped into an article before exposure to thermal treatment and crosslinking.

Since the crosslinking occurs thermally, the crosslinking process can be coordinated with the manufacturing of the polymer (F) into a shaped article.

Polymer (F) may be thermally heated to undergo crosslinking as it is or in composition with an acidic crosslinking catalyst.

A further object of the present invention is thus a composition (C) comprising the crosslinkable polymer (F) as above defined and at least one acidic crosslinking catalyst.

Suitable acidic crosslinking catalysts include, for example, Lewis acids, strong mineral acids, e.g., sulfuric acid, phosphoric acid, polyphosphoric acid, perchloric acid, and the like; saturated aliphatic hydrocarbon sulfonic acids and the aromatic hydrocarbon sulfonic acids, e.g., ethanesulfonic acid, propanesulfonic acid, benzenesulfonic acid, toluenesulfonic acid, naphthalenesulfonic acid, lower alkyl substituted benzenesulfonic acid, and the like.

Suitable Lewis acids here are inorganic or organic metal compounds in which the cation is preferably selected from the group consisting of boron, aluminium, tin, antimony and iron.

Of the Lewis acids mentioned, particular preference is given, in particular, to metal halide Lewis acids, e.g., boron trifluoride, aluminum chloride, zinc chloride, stannous chloride, antimony trichloride, ferric chloride, boron trifluoridedimethyl ether complex, boron trifluoride-diethyl ether complex, boron trifluoride-dipropyl ether complex, and the like, with stannous chloride being particularly preferred.

The Lewis acids include not only Lewis acids themselves but also metals or metal compounds which impart a function of Lewis acid, for example oxides and sulfides, antimony trioxide ($Sb_2O_3$), zinc oxide (ZnO), and zinc sulphide (ZnS) being preferred.

In composition (C), the acidic crosslinking agent is preferably comprised in an amount comprised between 0.001 and 2.0% by weight, more preferably comprised between 0.005 and 0.5% by weight with respect to the total weight of polymer (F).

Generally, the composition (C) is obtained by mixing the acidic crosslinking agent with polymer (F) in a suitable mixer.

Composition (C) may be obtained by mixing the acidic crosslinking agent with polymer (F) in the form of solution (S), as above defined, leading to a composition (CS) in the form of solution.

Composition (C) may be obtained mixing the acidic crosslinking agent with polymer (F) in the form of dispersion (D), as above defined, leading to a composition (CD) in the form of dispersion.

In an embodiment of the present invention, a composition (C) comprises, preferably consists of:

a) a polymer (F) comprising recurring units derived from:

- at least 70% by moles, preferably at least 75% by moles, more preferably at least 85% by moles of vinylidene fluoride (VDF),
- from 0.1% to 3.0% by moles, preferably from 0.2% to 1.5% by moles, more preferably from 0.5% to 1.0% by moles of at least one hydroxyl group-containing vinyl monomer (HA);
- from 0.1% to 3.0% by moles, preferably from 0.2% to 1.5% by moles, more preferably from 0.5% to 1.0% by moles of at least one carboxyl group-containing vinyl monomer (CA);
- optionally from 0.5 to 3.0% by moles of recurring units derived from at least one fluorinated comonomer (CF);

b) an acidic crosslinking catalyst in an amount comprised between 0.001 and 2.0% by weight, more preferably comprised between 0.005 and 0.5% by weight with respect to the total weight of polymer (F).

In another embodiment of the present invention, a composition (CS) comprises, preferably consists of:

a) a polymer (F) comprising recurring units derived from:

- at least 70% by moles, preferably at least 75% by moles, more preferably at least 85% by moles of vinylidene fluoride (VDF),
- from 0.1% to 3.0% by moles, preferably from 0.2% to 1.5% by moles, more preferably from 0.5% to 1.0% by moles of at least one hydroxyl group-containing vinyl monomer (HA);
- from 0.1% to 3.0% by moles, preferably from 0.2% to 1.5% by moles, more preferably from 0.5% to 1.0% by moles of at least carboxyl group-containing vinyl monomer (CA);
- optionally from 0.5 to 3.0% by moles of recurring units derived from at least one fluorinated comonomer (CF);

b) an acidic crosslinking catalyst in an amount comprised between 0.001 and 2.0% by weight, more preferably comprised between 0.005 and 0.5% by weight with respect to the total weight of polymer (F); and
c) at least one organic solvent.

In another embodiment of the present invention, a composition (CD) comprises, preferably consists of:

a) a polymer (F) comprising recurring units derived from:

- at least 70% by moles, preferably at least 75% by moles, more preferably at least 85% by moles of vinylidene fluoride (VDF),
- from 0.1% to 3.0% by moles, preferably from 0.2% to 1.5% by moles, more preferably from 0.5% to 1.0% by moles of at least one hydroxyl group-containing vinyl monomer (HA);
- from 0.1% to 3.0% by moles, preferably from 0.2% to 1.5% by moles, more preferably from 0.5% to 1.0% by moles of at least one carboxyl group-containing vinyl monomer (CA);
- optionally from 0.5 to 3% by moles of recurring units derived from at least one fluorinated comonomer (CF);

b) an acidic crosslinking catalyst in an amount of less than 2.0% by weight, more preferably less than 0.5% by weight with respect to the total weight of polymer (F); and
c) water.

Composition (CS) and composition (CD) can be submitted to a heat treatment for the removal of the at least one organic solvent or of water, respectively, to give again composition (C) free from said organic solvent or water.
The crosslinkable polymer (F) or composition (C) of the present invention may be thermally treated at a temperature comprised between 130°C and 250°C to achieve a crosslinked fluoropolymer (XLF) characterized by an enhanced molecular weight.
As used herein, "thermal treatment", "thermally crosslinked" and "occurs thermally" are understood to mean that the cross-linking process of the invention is activated by temperature. One skilled in the art will recognize that the time required to achieve cross-linking will in general depend on the temperature, with cross-linking occurring more rapidly as temperature increases. The time of the heat treatment may thus vary from 5 minutes up to 30 days, depending on the temperature and on the nature of polymer (F).
Thermal crosslinking involves reaction of at least a portion of the hydroxyl groups of recurring units derived from monomer (HA) with at least a portion of the carboxyl groups of recurring units derived from monomer (CA).
The polymer (F) and the composition (C) of the invention can be suitably converted into shaped articles and then submitted to thermal crosslinking to improve the performances of said articles.
In one aspect, the present invention provides a method for making an article comprising the crosslinked fluoropolymer (XLF), the method comprising:

a) melt processing the polymer (F) or the composition (C) as above defined through a technique such as extrusion, injection molding, compression molding, transfer molding, and the like into a shaped article;
b) thermally treating the shaped article obtained in step a) at a temperature comprised between 130°C and 250°C.

In a preferred embodiment of the invention, when melt processing is involved the intrinsic viscosity of polymer (F), measured in dimethylformamide at 25 °C, is comprised between 0.05 l/g and 0.15 l/g.
In another aspect, the present invention provides a method for making an article comprising the crosslinked fluoropolymer (XLF), the method comprising:

a) processing a solution (S) or a solution (CS) in an organic solvent as above defined through techniques such as casting the solutions in open molds, on horizontal surfaces or pads, to into a shaped article;
b) removing the organic solvent to give a shaped article of polymer (F) or of composition (C);
c) thermally treating the shaped article obtained in step b) at a temperature comprised between 130°C and 250°C.

In a preferred embodiment of the invention, when solution process is involved, the intrinsic viscosity of polymer (F), measured in dimethylformamide at 25°C, is suitably comprised between 0.15 l/g and 0.35 l/g.
In another aspect, the present invention provides a method for making an article comprising the crosslinked fluoropolymer (XLF), the method comprising:

a) processing a dispersion (D) or a dispersion (CD) in water as above defined through techniques such as into a shaped article;

b) removing water to give a shaped article of polymer (F) or of composition (C);
c) thermally treating the shaped article obtained in step b at a temperature comprised between 130°C and 250°C.

The present invention further pertains to an article comprising the crosslinked fluoropolymer (XLF) obtained as above defined.

The main targeted uses of the crosslinkable fluoropolymers (F) of the invention, and of compositions (C) comprising said polymers (F), are for the manufacture of articles that can be shaped and later undergo crosslinking by thermal treatments, while maintaining the well known and proved characteristics of PVDF in terms of chemical resistance, surface properties, high service temperatures.

For example, polymers (F) or compositions (C) in solid form are particularly suitable for the preparation of pipes, sheets, fittings and coatings in Chemical Processing Industry and in Oil and Gas Industry.

Polymers (F) or compositions (C) in solution are particularly suitable for the preparation of film and membranes, porous membranes in particular such as for example as described in Journal of Membrane Science 178 (2000) 13-23.

Polymers (F) or compositions (C) in dispersion are particularly suitable for the preparation of components for batteries, such as binders for electrodes and layers to be used as separator coating, such as for example for applications described in US201503906 (ARKEMA Inc.) 19/08/2014.

EXPERIMENTAL PART

Determination of intrinsic viscosity of polymer (F)

Intrinsic viscosity (η) [dl/g] was measured using the following equation on the basis of dropping time, at 25°C, of a solution obtained by dissolving the polymer (F) in N,N-dimethylformamide at a concentration of about 0.2 g/dl using a Ubbelhode viscosimeter:

$$[\eta] = \frac{\eta_{sp} + \Gamma \cdot \ln \eta_r}{(1+\Gamma) \cdot c}$$

where c is polymer concentration [g/dl], $\eta_r$ is the relative viscosity, i.e. the ratio between the dropping time of sample solution and the dropping time of solvent, $\eta_{sp}$ is the specific viscosity, i.e. $\eta_r$ -1, and $\Gamma$ is an experimental factor, which for polymer (F) corresponds to 3.

Determination of randomly distributed (HA) and (CA) units fraction Fraction of randomly distributed HA and CA units is determined by $^{19}$F-NMR, following the procedures disclosed in WO 2013/010936.

Raw materials

Comp 1: VDF-AA copolymer prepared according to WO 2008129041.
Comp 2: VDF-HEA copolymer prepared according to WO 2008129041.

**Example 1: Preparation of tetrapolymer VDF-HFP-AA-HEA (Copo 3)**

In a 4 liters reactor equipped with an impeller running at a speed of 650 rpm were introduced in sequence 2265 g of demineralised water, 0.7g of Alkox® E-45 and 0.18g of Methocell® K100 as suspending agent. The reactor was purged with sequence of vacuum (30 mmHg) and purged of nitrogen at 20°C. Then 9.41 g of a 75% by weight solution of t-amyl perpivalate initiator in isododecane as initiator and 15.3g of diethyl carbonate (DEC) were introduced. At a speed of 880 rpm 7.64 g of acrylic acid (AA), 7.64 g of hydroxyl ethyl acrylate (HEA) and 59 g of hexafluoropropylene (HFP) were introduced. Finally, 1100 g of vinylidene fluoride (VDF) was introduced in the reactor. The reactor was gradually heated until a set-point temperature at 57°C and the pressure was fixed at 120 bars. The pressure was kept constantly equal to 120 bars by feeding 780 g of demineralized water during the polymerization. After this feeding, no more aqueous solution was introduced and the pressure started to decrease. The polymerization was stopped by degassing the reactor until reaching atmospheric pressure. A conversion at 77% of monomers was reached. The polymer so obtained was then recovered, washed with demineralised water and dried at 65°C during all the night.

**Example 2: Preparation of terpolymers : VDF-AA-HEA (F1, F2, F3)**

In a 4 liters reactor equipped with an impeller running at a speed of 650 rpm were introduced in sequence, the demineralised water and 0.8 g/kg Mni (initial of monomers added in reactor before the set point temperature) of Methocell® K100. The reactor was purged with sequence of vacuum (30 mmHg) and purged of nitrogen at 20°C. Then 11 g of t-amyl-perpivalate in isododecane (a 75% by weight solution) as initiator was introduced and if needed as described in table 1, the DEC was introduced. At a speed of 880 rpm, the acrylic acid (AA) and the hydroxyethyl acrylate (HEA) were introduced, see table 1. Finally, 1174 g of vinylidene fluoride (VDF) was introduced in the reactor. The reactor was gradually heated until a set-point temperature at 58°C for Polymer F1 and 59°C for Polymers F2 and F3 and the pressure was fixed at 110 bar. The pressure was kept constantly equal to 110 bar by feeding during the polymerization, the acrylic acid and the hydroxyethyl acrylate mixed in aqueous solution with a concentration of AA and HEA as described in the table 1. After this feeding, no more aqueous solution was introduced and the pressure started to decrease. The polymerization was stopped by degassing the reactor until reaching atmospheric pressure. A conversion of monomers between 77 and 79% were reached. The polymer so obtained was then recovered, washed with demineralised water and dried at 65°C during all the night.

The amounts of monomers and temperature conditions are specified in Table 1.

**Table 1**

| Polymer | Water 9 | DEC 9 | AA initial 9 | HEA initial 9 | AA feeding 9 ([AA] in water g/kg water) | HEA feeding 9 ([HEA] in water g/kg water) |
|---|---|---|---|---|---|---|
| F1 | 2150 | 5.94 | 0.31 | 0.31 | 7.41 (8.51) | 7.41 (8.51) |
| F2 | 2130 | 0 | 0.15 | 0.46 | 3.71 (4.26) | 11.12 (12.77) |
| F3 | 2140 | 9.51 | 0.46 | 0.15 | 11.12 (12.77) | 3.71 (4.26) |

**Example 3: Preparation of tetrapolymers: VDF-HFP-AA-HEA (F4, F5, F6, F7)**

In a 4 litres reactor equipped with an impeller running at a speed of 650 rpm were introduced in sequence, 2 205 g of demineralised water and 0.6 g/kg Mni (initial of monomers added in reactor before the set point temperature) of Methocell® K100. The reactor was purged with sequence of vacuum (30 mmHg) and purged of nitrogen at 20°C. Then 9.50 g of t-amyl-perpivalate in isododecane (a 75% by weight solution) as initiator was introduced followed by the diethyl carbonate (DEC) as described in the table 2. At a speed of 880 rpm, the acrylic acid (AA) and the hydroxyethyl acrylate (HEA) were introduced, see Table 2. Finally, 59 g of hexafluoropropylene (HFP) and 1114 g of vinylidene fluoride (VDF) were introduced in the reactor. The reactor was gradually heated until a set-point temperature at 57°C and the pressure was fixed at 110 bar. The pressure was kept constantly equal to 110 bar by feeding during the polymerization, the acrylic acid and the hydroxyethyl acrylate mixed in aqueous solution with a concentration of AA and HEA as described in the table 2. After this feeding, no more aqueous solution was introduced and the pressure started to decrease. The polymerization was stopped by degassing the reactor until reaching atmospheric pressure. A conversion of monomers between 72 and 76% was reached. The polymer so obtained was then recovered, washed with demineralised water and dried at 65°C during all the night.

The amounts of monomers and temperature conditions are specified in Table 2.

**Table 2**

| Polymer | DEC g | AA initial g | HEA initial g | AA feeding g ([AA] in water g/kg water) | HEA feeding g ([HEA] in water g/kg water) |
|---|---|---|---|---|---|
| | | | | | |
| F4 | 19.01 | 0.37 | 0.09 | 11.98 (14.98) | 3.0 (3.75) |
| F5 | 9.5 | 0.09 | 0.37 | 3.0 (3.75) | 11.98 (14.98) |
| F6 | 11.9 | 0.23 | 0.23 | 7.49 (9.36) | 7.49 (9.36) |
| F7 | 5.94 | 0.03 | 0.44 | 0.81 (1.01) | 14.18 (17.72) |

The composition and intrinsic viscosities of the polymers prepared in Examples 1 to 3 and of Comp 1 and 2 are reported in Table 3.

**Table 3**

| Polymer | NMR composition | | | | Intrinsic viscosity DMF at 25°C l/g | Ratio AA:HEA |
|---|---|---|---|---|---|---|
| | VDF mol% | HFP mol% | AA mol% | HEA mol% | | |
| Comp 1 | 99.1 | - | 0.9 | - | 0,08 | |
| Comp 2 | 99.1 | - | - | 0.9 | 0,08 | |
| Comp 3 | About 97.4 | 1.0 | n.d. | n.d. | 0.13 | |
| F1 | 99 | - | 0.6 | 0.4 | 0.09 | 1.5 : 1 |
| F2 | 99.1 | - | 0.4 | 0.5 | 0.089 | 0.8 : 1 |
| F3 | 98 | - | 0.5 | 0.4 | 0.10 | 1.25 : 1 |
| F4 | 98.0 | 1.0 | 0.8 | 0.2 | 0.097 | 4:1 |
| F5 | 98.1 | 1.1 | 0.2 | 0.6 | 0.079 | 1:3 |
| F6 | 98 | 1.1 | 0.5 | 0.4 | 0.087 | 1.3:1 |
| F7 | 98.2 | 1.1 | 0.02 | 0.7 | 0.089 | 1:35 |

The fraction of randomly distributed units (HA) and (CA) is more than 40% for polymers F1 to F6.

**Example 4: Melt extrusion and pelletization of F6**

Polymer F6 obtained in Example 3 was pelletized in a twin screw co-rotating extruder (Leistritz LSM 30.34 GG-5R having a screw diameter D of 34 mm) equipped with a main feeder. There is six temperature controlled zones that permit to set the desired temperature profile (see Table 4). The die was composed of two holes having each a diameter of 4mm. The extruder rotation speed was 100 rpm. The two extrudates were cooled in a water tank, pull out and then dried with compressed air. At the end, the two extrudates were cut-off in order to obtain the pellets.

**Table 4**

| Zone | 1 | 2 | 3 | 4 | 5 | 6 |
|---|---|---|---|---|---|---|
| Temperature Profile [°C] | 170 | 170 | 175 | 175 | 175 | 175 |

**Example 5: Compounding with $Sb_2O_3$ (100 ppm), melt extrusion and pelletization of Polymer F6 (compound C1)**

Polymer F6 obtained in Example 3 was mixed with a high speed mixer Henschel (FML 40 Model) with 0.01 weight percent of Antimony(III) oxide ($Sb_2O_3$) provided by Sigma-Aldrich with respect to the weight of polymer F6. The mixed powder was introduced and pelletized in a twin screw co-rotating extruder (Leistritz LSM 30.34 GG-5R having a screw diameter D of 34 mm) equipped with a main feeder. The same six temperature controlled zones in Example 4 were used (see Table 4). The die was composed of two holes having each a diameter of 4mm. The extruder rotation speed was 100 rpm. The two extrudates were cooled in a water tank, pull out and then dried with compressed air. At the end, the two extrudates were cut-off in order to obtain the pellets.

**Example 6: Compounding with $Sb_2O_3$ (250 ppm), melt extrusion and pelletization of Polymer F6 (compound C2)**

In a first step, the Polymer F6 obtained in Example 3 was mixed with a high speed mixer Henschel (FML 40 Model) with 0.025 weight percent of Antimony(III) oxide ($Sb_2O_3$) provided by Sigma-Aldrich with respect to the weight of polymer F6. Then, in a second step, the mixed powder was introduced and pelletized in a twin screw co-rotating extruder (Leistritz LSM 30.34 GG-5R having a screw diameter D of 34 mm) equipped with a main feeder. The same six temperature controlled zones in Example 4 were used (see Table 4). The die was composed of two holes having each a diameter of 4mm. The extruder rotation speed was 100 rpm. The two extrudates were cooled in a water tank, pull out and then dried with compressed air. At the end, the two extrudates were cut-off in order to obtain the pellets.

**Example 7: Compounding with ZnO (250 ppm), melt extrusion and pelletization of Polymer F6 (compound C3)**

The same procedure of example 6 was followed, with the exception that ZnO instead of $Sb_2O_3$ was used.

**Example 8: Compounding with ZnO (10000 ppm), melt extrusion and pelletization of Polymer F6 (compound C4)**

The same procedure of example 6 was followed, with the exception that ZnO 10000 ppm instead of $Sb_2O_3$ was used.

**Example 9: Compounding with ZnS (10000 ppm), melt extrusion and pelletization of Polymer F6 (compound C5)**

The same procedure of example 6 was followed, with the exception that ZnS 10000 ppm instead of $Sb_2O_3$ was used.

**Example 10: heat treatment - crosslinking**

The polymers summarized in Table 3 and compounds C1 to C5 were put in Dynamic mechanical spectrometer Anton Paar MCR502 (Geometry: Parallel plates (25 mm); Mode: Dynamic time sweep test at two temperatures 190°C and 230°C). The apparent viscosity measured after 28.8 seconds and 7 200 seconds is presented in the following Table 5.

**Table 5**

| Polymer | Apparent Viscosity (Pa*s) | | | |
|---|---|---|---|---|
| | 190°C 28.8s | 230°C 28.8s | 190°C 7 200s | 230°C 7 200s |
| Comp 1 | | 1 499 | | 1 954 |
| Comp 2 | | 1 917 | | 13 873 |
| Comp 3 | | 11890 | | 12912 |
| F1 | | 5 128 | | 179 060 |
| F2 | | 3 734 | | 105 340 |
| F3 | | 9 201 | | 181 080 |
| F4 | | 4 289 | | 126 540 |
| F5 | | 1 461 | | 60 761 |
| F6 | | 3 755 | | 183 930 |
| F7 | | 1 375 | | 16 925 |
| Pellets of Example 4 | 9 117,6 | | 47 622 | |
| Compound C1 | 10 235 | | 71 113 | |
| Compound C2 | 11 772 | | 105 280 | |
| Compound C3 | 12741 | | 125000 | |
| Compound C4 | 42998 | | 161000 | |
| Compound C5 | 8280 | | 61745 | |

**Example 11: Crosslinking evaluation**

With the pellets of Example 4 and Example 6 two plaques each of 1.5mm of thickness (10x10cm) were prepared. One of each has been treated in an oven at 140°C and 48h. Then percentage of gel of the four plaques was determined as follows.

Dissolution in DMA of the pellet (0.25 % w/vol) at 45°C, under stirring, until complete dissolution (about two hours). Then centrifugation at 20000 rpm for 60 minutes at room temperature using a Sorvall RC-6 Plus centrifuge (rotor model: F21S - 8X50Y). Then weighing the dried residual to estimate the gel percentage.

The results are presented in the Table 6.

**Table 6**

| Plaques | Insoluble (w%) |
|---|---|
| F6 | <3 |
| F6<br>Treated at 140°C/48h | 59 |
| Compound C2 | <3 |
| Compound C2<br>Treated at 140°C/48h | 67 |

The results show that polymer F6 and Compound C2 are fully crosslinked, the percentage of insoluble being very high.

## Claims

1. A crosslinkable fluoropolymer [polymer (F)] comprising:

   - (i) recurring units derived from vinylidene fluoride (VDF) monomer;
   - (ii) recurring units derived from at least one hydroxyl group-containing vinyl monomer (HA);
   - (iii) recurring units derived from at least one carboxyl group-containing vinyl monomer (CA);

   wherein the total amount of monomer (HA) and monomer (CA) in said polymer (F) is of at most 10.0 % by moles, preferably at most 5.0% by moles, more preferably at most 1.5% by moles, with respect to the total moles of recurring units of polymer (F); and
   wherein a fraction of at least 40% of monomer (HA) and a fraction of at least 40% of monomer (CA) are randomly distributed into said polymer (F), the fractions of randomly distributed monomers being determined according to the method defined in present specification.

2. The polymer (F) of claim 1 wherein the hydroxyl group-containing vinyl monomer (HA) is a compound of formula (I):

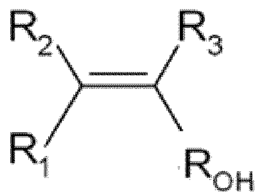

(I)

   wherein:
   $R_1$, $R_2$ and $R_3$, equal to or different from each other, are independently selected from a hydrogen atom, a halogen atom, and a $C_1$-$C_3$ hydrocarbon group and $R_{OH}$ is a $C_2$-$C_{10}$ hydrocarbon chain moiety comprising at least one hydroxyl group and possibly containing in the chain one or more oxygen atoms, carbonyl groups or carboxy groups.

3. The polymer (F) of claim 2 wherein monomer (HA) is a compound of formula (Ia):

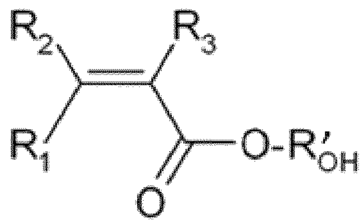

(Ia)

wherein:
$R_1$, $R_2$ and $R_3$, equal to or different from each other, are independently selected from a hydrogen atom and a $C_1$-$C_3$ hydrocarbon group and $R'_{OH}$ is a $C_1$-$C_5$ hydrocarbon moiety comprising at least one hydroxyl group.

**4.** The polymer (F) of claim 3 wherein monomer (HA) of formula (Ia) is selected from the group consisting of hydroxyethyl(meth)acrylate (HEA), 2-hydroxypropyl acrylate (HPA), hydroxyethylhexyl(meth)acrylate, and mixtures thereof.

**5.** The polymer (F) of claim 1 wherein the carboxyl group-containing vinyl monomer (CA) is a compound of formula (II):

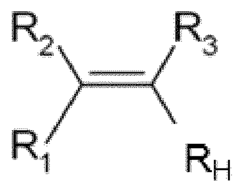

(II)

wherein:
$R_1$, $R_2$ and $R_3$, equal to or different from each other, are independently selected from a hydrogen atom and a $C_1$-$C_3$ hydrocarbon group and $R_H$ is a $C_1$-$C_{10}$ hydrocarbon chain moiety comprising at least one carboxyl group.

**6.** The polymer (F) of claim 5 wherein monomer (CA) is a compound of formula (IIa):

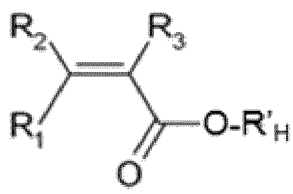

(IIa)

wherein
$R_1$, $R_2$ and $R_3$, equal to or different from each other, are independently selected from a hydrogen atom and a $C_1$-$C_3$ hydrocarbon group and $R'_H$ is a hydrogen or $C_1$-$C_5$ hydrocarbon moiety comprising at least one carboxyl group.

**7.** The polymer (F) of claim 6 wherein monomer (CA) of formula (IIa) is selected from the group consisting of acrylic acid (AA), (meth)acrylic acid and mixtures thereof.

**8.** The polymer (F) according to anyone of the preceding claims wherein the molar ratio between monomer (HA) and monomer (CA) in polymer (F) is preferably comprised in the range from 20:1 to 1:20, preferably from 10:1 to 1:10, more preferably from 1:2 to 2:1; still more preferably, the molar ratio is 1:1.

**9.** The polymer (F) according to anyone of the preceding claims which further comprises recurring units derived from one or more fluorinated comonomers (CF) different from VDF.

**10.** The polymer (F) according to anyone of the preceding claims which comprises preferably consists of:

- at least 70% by moles, preferably at least 75% by moles, more preferably at least 85% by moles of vinylidene fluoride (VDF),
- from 0.1% to 3.0% by moles, preferably from 0.2% to 1.5% by moles, more preferably from 0.5% to 1.0% by moles of at least one hydroxyl group-containing vinyl monomer (HA);
- from 0.1% to 3.0% by moles, preferably from 0.2% to 1.5% by moles, more preferably from 0.5% to 1.0% by moles of at least one carboxyl group-containing vinyl monomer (CA);
- optionally from 0.5 to 3.0% by moles of recurring units derived from at least one fluorinated comonomer (CF).

**11.** The polymer (F) according to anyone of the preceding claims wherein the intrinsic viscosity of polymer (F), measured in dimethylformamide at 25 °C, is lower than 0.80 l/g, preferably lower than 0.50 l/g, more preferably lower than 0.20 l/g.

**12.** A composition (C) comprising the crosslinkable polymer (F) according to anyone of the preceding claims and at least one acidic crosslinking catalyst.

**13.** The composition (C) of claim 12 wherein the acidic crosslinking catalyst is a Lewis acid selected from the group consisting of boron trifluoride, aluminum chloride, zinc chloride, stannous chloride, antimony trichloride, ferric chloride, boron trifluoridedimethyl ether complex, boron trifluoride-diethyl ether complex, boron trifluoride-dipropyl ether complex and antimony trioxide.

**14.** A process for preparing a crosslinked fluoropolymer (XLF) comprising the step of submitting a polymer (F) or a composition (C) according to anyone of claims 1 to 13 to a heat treatment at a temperature comprised between 130°C and 250°C.

**15.** A shaped article comprising the crosslinked fluoropolymer (XLF) according to claim 14.

**16.** A method for making a shaped article comprising the crosslinked fluoropolymer (XLF), the method comprising:

(a) processing the polymer (F) or the composition (C) according to anyone of claims 1 to 13 into a shaped article;
(b) thermally treating the shaped article provided in step (a) at a temperature comprised between 130°C and 250°C.

**Patentansprüche**

**1.** Vernetzbares Fluorpolymer [Polymer (F)], umfassend:

- (i) Wiederholungseinheiten, die sich von Vinylidenfluorid(VDF)-Monomer ableiten;
- (ii) Wiederholungseinheiten, die sich von mindestens einem hydroxylgruppenhaltigen Vinylmonomer (HA) ableiten;
- (iii) Wiederholungseinheiten, die sich von mindestens einem carboxylgruppenhaltigen Vinylmonomer (CA) ableiten;

wobei die Gesamtmenge von Monomer (HA) und Monomer (CA) in dem Polymer (F) höchstens 10,0 Mol-%, vorzugsweise höchstens 5,0 Mol-%, weiter bevorzugt höchstens 1,5 Mol-%, bezogen auf die gesamten Mole von Wiederholungseinheiten von Polymer (F), beträgt und
wobei ein Anteil von mindestens 40 % von Monomer (HA) und ein Anteil von mindestens 40 % von Monomer (CA) statistisch in dem Polymer (F) verteilt sind, wobei die Fraktionen von statistisch verteilten Monomeren gemäß der in der vorliegenden Patentanmeldung definierten Methode bestimmt werden.

**2.** Polymer (F) nach Anspruch 1, wobei es sich bei dem hydroxylgruppenhaltigen Vinylmonomer (HA) um eine Verbindung der Formel (1) handelt:

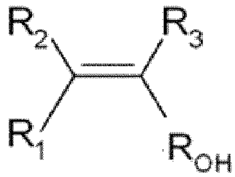

(I)

wobei:
$R_1$, $R_2$ und $R_3$, die gleich oder voneinander verschieden sind, unabhängig aus einem Wasserstoffatom, einem Halogenatom und einer $C_1$-$C_3$-Kohlenwasserstoffgruppe ausgewählt sind und $R_{OH}$ für eine $C_2$-$C_{10}$-Kohlenwasserstoffkettengruppierung mit mindestens einer Hydroxylgruppe und gegebenenfalls einem oder mehreren Sauerstoffatomen, einer oder mehreren Carbonylgruppen oder einer oder mehreren Carboxygruppen in der Kette steht.

**3.** Polymer (F) nach Anspruch 2, wobei es sich bei dem Monomer (HA) um eine Verbindung der Formel (Ia) handelt:

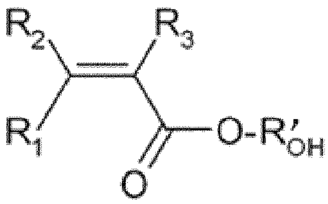

(Ia)

wobei:
$R_1$, $R_2$ und $R_3$, die gleich oder voneinander verschieden sind, unabhängig aus einem Wasserstoffatom und einer $C_1$-$C_3$-Kohlenwasserstoffgruppe ausgewählt sind und $R'_{OH}$ für eine $C_1$-$C_5$-Kohlenwasserstoffgruppierung mit mindestens einer Hydroxylgruppe steht.

**4.** Polymer (F) nach Anspruch 3, wobei das Monomer (HA) der Formel (Ia) aus der Gruppe bestehend aus Hydroxyethyl(meth)acrylat (HEA), 2-Hydroxypropylacrylat (HPA), Hydroxyethylhexyl(meth)acrylat und Mischungen davon ausgewählt ist.

**5.** Polymer (F) nach Anspruch 1, wobei es sich bei dem carboxylgruppenhaltigen Vinylmonomer (CA) um eine Verbindung der Formel (II) handelt:

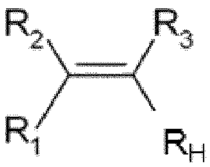

(II)

wobei:
$R_1$, $R_2$ und $R_3$, die gleich oder voneinander verschieden sind, unabhängig aus einem Wasserstoffatom und einer $C_1$-$C_3$-Kohlenwasserstoffgruppe ausgewählt sind und $R_H$ für eine $C_1$-$C_{10}$-Kohlenwasserstoffkettengruppierung mit mindestens einer Carboxylgruppe steht.

**6.** Polymer (F) nach Anspruch 5, wobei es sich bei dem Monomer (CA) um eine Verbindung der Formel (IIa) handelt:

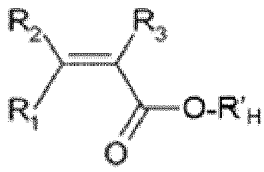

(IIa)

wobei
$R_1$, $R_2$ und $R_3$, die gleich oder voneinander verschieden sind, unabhängig aus einem Wasserstoffatom und einer $C_1$-$C_3$-Kohlenwasserstoffgruppe ausgewählt sind und $R'_H$ für eine Wasserstoff- oder $C_1$-$C_5$-Kohlenwasserstoffgruppierung mit mindestens einer Carboxylgruppe steht.

**7.** Polymer (F) nach Anspruch 6, wobei das Monomer (CA) der Formel (IIa) aus der Gruppe bestehend aus Acrylsäure (AA), (Meth)acrylsäure und Mischungen davon ausgewählt ist.

**8.** Polymer (F) nach einem der vorhergehenden Ansprüche, wobei das Molverhältnis zwischen Monomer (HA) und Monomer (CA) in Polymer (F) vorzugsweise im Bereich von 20:1 bis 1:20, vorzugsweise von 10:1 bis 1:10, weiter bevorzugt von 1:2 bis 2:1 beträgt und das Molverhältnis noch weiter bevorzugt 1:1 beträgt.

**9.** Polymer (F) nach einem der vorhergehenden Ansprüche, das ferner Wiederholungseinheiten, die sich von einem oder mehreren fluorierten Comonomeren (CF), die von VDF verschieden sind, ableiten, umfasst.

**10.** Polymer (F) nach einem der vorhergehenden Ansprüche, das Folgendes umfasst, vorzugsweise aus Folgendem besteht:

- mindestens 70 Mol-%, vorzugsweise mindestens 75 Mol-%, weiter bevorzugt mindestens 85 Mol-%, Vinylidenchlorid (VDF);
- 0,1 bis 3,0 Mol-%, vorzugsweise 0,2 bis 1,5 Mol-%, noch weiter bevorzugt 0,5 bis 1,0 Mol-%, mindestens eines hydroxylgruppenhaltigen Vinylmonomers (HA);
- 0,1 bis 3,0 Mol-%, vorzugsweise 0,2 bis 1,5 Mol-%, noch weiter bevorzugt 0,5 bis 1,0 Mol-%, mindestens eines carboxylgruppenhaltigen Vinylmonomers (CA);
- gegebenenfalls, 0,5 bis 3,0 Mol-% Wiederholungseinheiten, die sich von mindestens einem fluorierten Comonomer (CF) ableiten.

**11.** Polymer (F) nach einem der vorhergehenden Ansprüche, wobei die intrinsische Viskosität von Polymer (F), gemessen in Dimethylformamid bei 25 °C, weniger als 0,80 l/g, vorzugsweise weniger als 0,50 l/g, weiter bevorzugt weniger als 0,2 ml/g, beträgt.

**12.** Zusammensetzung (C), umfassend das vernetzbare Polymer (F) nach einem der vorhergehenden Ansprüche und mindestens einen sauren Vernetzungskatalysator.

**13.** Zusammensetzung (C) nach Anspruch 12, wobei es sich bei dem sauren Vernetzungskatalysator um eine Lewis-Säure handelt, die aus der Gruppe bestehend aus Bortrifluorid, Aluminiumtrichlorid, Zinkchlorid, Zinn(II)-chlorid, Antimontrichlorid, Eisen(III)-chlorid, Bortrifluorid-Dimethylether-Komplex, Bortrifluorid-Diethylether-Komplex, Bortrifluorid-Dipropylether-Komplex und Antimontrioxid ausgewählt ist.

**14.** Verfahren zur Herstellung eines vernetzten Fluorpolymers (XLF), umfassend den Schritt des Wärmebehandelns eines Polymers (F) oder einer Zusammensetzung (C) nach einem der Ansprüche 1 bis 13 bei einer Temperatur zwischen 130 °C und 250 °C.

**15.** Formkörper, umfassend das vernetzte Fluorpolymer (XLF) nach Anspruch 14.

**16.** Verfahren zur Herstellung eines Formkörpers, der das vernetzte Fluorpolymer (XLF) umfasst, wobei das Verfahren Folgendes umfasst:

(a) Verarbeiten des Polymers (F) oder der Zusammensetzung (C) nach einem der Ansprüche 1 bis 13 zu einem

Formkörper;
(b) Wärmebehandeln des in Schritt (a) bereitgestellten Formkörpers bei einer Temperatur zwischen 130 °C und 250 °C.

**Revendications**

1. Fluoropolymère réticulable [polymère (F)] comprenant :

- (i) des motifs répétitifs issus d'un monomère de fluorure de vinylidène (VDF) ;
- (ii) des motifs répétitifs issus d'au moins un monomère vinylique contenant un groupe hydroxyle (HA) ;
- (iii) des motifs répétitifs issus d'au moins un monomère vinylique contenant un groupe carboxyle (CA) ;

la quantité totale de monomère (HA) et de monomère (CA) dans ledit polymère (F) étant d'au plus 10,0 % en moles, préférablement d'au plus 5,0 % en moles, plus préférablement d'au plus 1,5 % en moles, par rapport au nombre total de moles de motifs répétitifs de polymère (F) ; et
une fraction d'au moins 40 % de monomère (HA) et une fraction d'au moins 40 % de monomère (CA) étant distribuées de manière aléatoire dans ledit polymère (F), les fractions de monomères distribués de manière aléatoire étant déterminées selon le procédé défini dans la présente description.

2. Polymère (F) selon la revendication 1, le monomère vinylique contenant un groupe hydroxyle (HA) étant un composé de formule (I) :

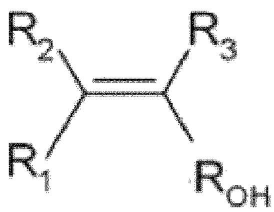

(I)

$R_1$, $R_2$ et $R_3$, identiques ou différents les uns des autres, étant indépendamment choisis parmi un atome d'hydrogène, un atome d'halogène, et un groupe hydrocarboné en $C_{1-3}$ et $R_{OH}$ étant un groupement de chaîne hydrocarbonée en $C_{2-10}$ comprenant au moins un groupe hydroxyle et contenant possiblement dans la chaîne un ou plusieurs atomes d'oxygène, groupes carbonyle ou groupes carboxy.

3. Polymère (F) selon la revendication 2, le monomère (HA) étant un composé de formule (Ia) :

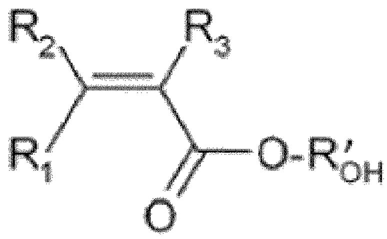

(Ia)

$R_1$, $R_2$ et $R_3$, identiques ou différents les uns des autres, étant indépendamment choisis parmi un atome d'hydrogène et un groupe hydrocarboné en $C_{1-3}$ et $R'_{OH}$ étant un groupement hydrocarboné en $C_{1-6}$ comprenant au moins un groupe hydroxyle.

4. Polymère (F) selon la revendication 3, le monomère (HA) de formule (Ia) étant choisi dans le groupe constitué par un (méth)acrylate d'hydroxyéthyle (HEA), l'acrylate de 2-hydroxypropyle (HPA), un (méth)acrylate d'hydroxyéthylhexyle, et des mélanges correspondants.

5. Polymère (F) selon la revendication 1, le monomère vinylique contenant un groupe carboxyle (CA) étant un composé

de formule (II) :

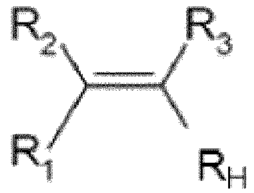

(II)

$R_1$, $R_2$ et $R_3$, identiques ou différents les uns des autres, étant indépendamment choisis parmi un atome d'hydrogène et un groupe hydrocarboné en $C_{1-3}$ et $R_H$ étant un groupement de chaîne hydrocarbonée en $C_{1-10}$ comprenant au moins un groupe carboxyle.

**6.** Polymère (F) selon la revendication 5, le monomère (CA) étant un composé de formule (IIa) :

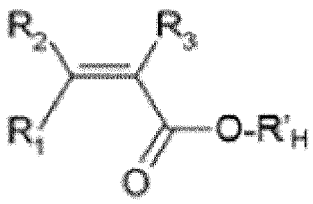

(IIa)

$R_1$, $R_2$ et $R_3$, identiques ou différents les uns des autres, étant indépendamment choisis parmi un atome d'hydrogène et un groupe hydrocarboné en $C_{1-3}$ et $R'_H$ étant un hydrogène ou un groupement hydrocarboné en $C_{1-5}$ comprenant au moins un groupe carboxyle.

**7.** Polymère (F) selon la revendication 6, le monomère (CA) de formule (IIa) étant choisi dans le groupe constitué par l'acide acrylique (AA), un acide (méth)acrylique et des mélanges correspondants.

**8.** Polymère (F) selon l'une quelconque des revendications précédentes, le rapport molaire entre le monomère (HA) et le monomère (CA) dans le polymère (F) étant préférablement compris dans la plage de 20 : 1 à 1 : 20, préférablement de 10 : 1 à 1 : 10, plus préférablement de 1 : 2 à 2 : 1 ; encore plus préférablement, le rapport molaire étant de 1 : 1.

**9.** Polymère (F) selon l'une quelconque des revendications précédentes qui comprend en outre des motifs répétitifs issus d'un ou plusieurs comonomères fluorés (CF) différents du VDF.

**10.** Polymère (F) selon l'une quelconque des revendications précédentes qui comprend, préférablement est constitué de :

- au moins 70 % en moles, préférablement au moins 75 % en moles, plus préférablement au moins 85 % en moles de fluorure de vinylidène (VDF),
- de 0,1 % à 3,0 % en moles, préférablement de 0,2 % à 1,5 % en moles, plus préférablement de 0,5 % à 1,0 % en moles d'au moins un monomère vinylique contenant un groupe hydroxyle (HA) ;
- de 0,1 % à 3,0 % en moles, préférablement de 0,2 % à 1,5 % en moles, plus préférablement de 0,5 % à 1,0 % en moles d'au moins un monomère vinylique contenant un groupe carboxyle (CA) ;
- éventuellement de 0,5 à 3,0 % en moles de motifs répétitifs issus d'au moins un comonomère fluoré (CF) .

**11.** Polymère (F) selon l'une quelconque des revendications précédentes, la viscosité intrinsèque du polymère (F), mesurée dans le diméthylformamide à 25 °C, étant inférieure à 0,80 l/g, préférablement inférieure à 0,50 l/g, plus préférablement inférieure à 0,20 l/g.

**12.** Composition (C) comprenant le polymère réticulable (F) selon l'une quelconque des revendications précédentes et au moins un catalyseur de réticulation acide.

**13.** Composition (C) selon la revendication 12, le catalyseur de réticulation acide étant un acide de Lewis choisi dans le groupe constitué par le trifluorure de bore, le chlorure d'aluminium, le chlorure de zinc, le chlorure stanneux, le trichlorure d'antimoine, le chlorure ferrique, un complexe trifluorure de bore-diméthyléther, un complexe trifluorure de bore-diéthyléther, un complexe trifluorure de bore-dipropyléther et le trioxyde d'antimoine.

**14.** Procédé pour la préparation d'un fluoropolymère réticulé (XLF) comprenant l'étape de soumission d'un polymère (F) ou d'une composition (C) selon l'une quelconque des revendications 1 à 13 à un traitement thermique à une température comprise entre 130 °C et 250 °C.

**15.** Article façonné comprenant le fluoropolymère réticulé (XLF) selon la revendication 14.

**16.** Procédé pour la fabrication d'un article façonné comprenant le fluoropolymère réticulé (XLF), le procédé comprenant :

(a) la transformation du polymère (F) ou de la composition (C) selon l'une quelconque des revendications 1 à 13 en un article façonné ;
(b) le traitement thermique de l'article façonné fourni dans l'étape (a) à une température comprise entre 130 °C et 250 °C.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5003008 A
- EP 0969023 A
- US 20060148912 A
- WO 2008129041 A
- US 4016345 A
- US 4725644 A
- US 6479591 B
- US 201503906 B
- WO 2013010936 A


### Non-patent literature cited in the description


- *Journal of Membrane Science,* 2000, vol. 178, 13-23